# FASCICULE DE BREVET EUROPEEN

(11) **EP 1 082 804 B1**
(45) Date de publication et mention de la délivrance du brevet: **10.10.2007**
(21) Numéro de dépôt: 00915219.0
(22) Date de dépôt: 27.03.2000
(51) Int. Cl.: H02K 21/04, H02K 1/22

(54) **MACHINE TOURNANTE COMPRENANT DES MOYENS D'EXCITATION PERFECTIONNES**
ROTIERENDE MASCHINE MIT VERBESSERTER ERREGUNG
ROTATING MACHINE WITH ADVANCED EXCITATION MEANS

(30) Priorité: 26.03.1999 FR 9903810
(43) Date de publication de la demande: 14.03.2001
(73) Titulaire: VALEO EQUIPEMENTS ELECTRIQUES MOTEUR, 94017 Créteil Cedex (FR)
(72) Inventeur: AKEMAKOU, Dokou, Antoine, F-94400 Vitry sur Seine (FR)
(74) Mandataire: Gamonal, Didier
(86) Numéro de dépôt international: PCT/FR2000/000758
(87) Numéro de publication internationale: WO 2000/059099

(56) Documents cités:
- EP-A- 0 741 444
- US-A- 5 682 073

## Description

La présente invention concerne d'une façon générale les machines électriques tournantes, et en particulier une machine tournante synchrone possédant un rotor à aimants permanents, telle qu'un alternateur ou alternateur-démarreur de véhicule automobile.

On connaît déjà dans l'état de la technique des machines tournantes dont le rotor possède une série d'aimants permanents, par exemple agencés en surface ou enterrés à une certaine distance au-dessous de la surface du rotor, de manière à définir une répartition appropriée de pôles Sud et Nord.

Une telle machine possédant une excitation imposée de façon permanente par les aimants du rotor, il est nécessaire de prévoir, dans le cas d'un alternateur, des dispositions pour ajuster la puissance électrique que délivre la machine à des charges en sortie : en effet, celui-ci est couramment relié à des charges dont la consommation varie dans le temps.

Dans le cas des alternateurs de véhicule automobile, la charge reliée à l'induit de l'alternateur peut ainsi varier fortement, cette charge pouvant même être nulle ou quasi nulle alors que le rotor inducteur de l'alternateur est en mouvement.

Pour ajuster la puissance électrique délivrée par la machine tournante, une solution connue consiste à interposer entre les aimants du rotor des parties magnétiques de défluxage pour canaliser une partie du flux magnétique circulant entre le rotor et le stator. Ce flux de défluxage ne contribue pas à la génération de courant par les bobinages du stator induit. L'intensité de ce flux s'ajuste d'elle-même, en fonction de la charge imposée à la sortie de l'induit.

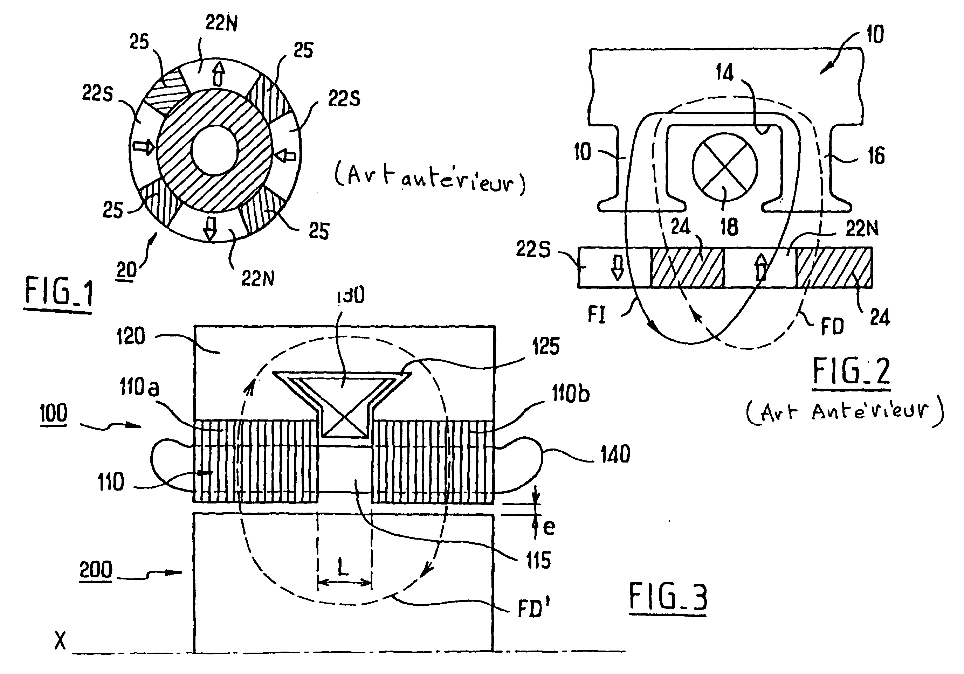

Une solution de défluxage connue est ainsi illustrée sur la figure 1, où un rotor 20 comprend des aimants 22S définissant des pôles Sud et des aimants 22N définissant des pôles Nord, en alternance. Cette solution connue consiste à interposer entre chaque paire d'aimants adjacents une pièce magnétique de défluxage 25, ces pièces étant aptes à coopérer avec les pôles du stator pour autoriser un défluxage.

On a par ailleurs illustré sur la figure 2, de façon développée, le comportement schématisé et imagé de ce rotor en coopération avec un stator 10 possédant des dents 16 délimitées par des encoches 14 abritant des bobinages d'induit 18, avec un flux induit FI créé par les aimants et un flux inverse de défluxage FD. On observe sur cette figure que le flux induit et le flux de défluxage sont mal individualisés. On a constaté que cette superposition partielle des flux induits et des flux de défluxage, circulant dans des sens inverses, limitait les capacités de défluxage de la machine, et donc la gamme d'excitations possibles de la machine.

Par US-5,682,073 il est connu un moteur hybride comprenant un rotor formé en deux cylindres coaxiaux. Chaque cylindre de rotor comprend des pôles à aimants permanents et à réluctance variable disposés de manière alternée sur la circonférence, les pôles n, n+2 étant des pôles à aimant et les pôles n+1, n+3 étant des pôles à réluctance variable. Les cylindres de rotor comprennent des aimants de polarités différentes. Dans les cylindres de rotor, les pôles sont disposés de telle manière qu'un pôle n à aimant permanent d'un cylindre de rotor est en vis-à-vis avec un pôle n' à réluctance variable de l'autre cylindre de rotor. Une bobine d'excitation logée dans la carcasse du stator est également prévue pour alimenter en flux magnétique les pôles à réluctance variable du rotor. Ce moteur selon US-5,682,073 apporte une certaine amélioration en offrant une possibilité de défluxage et d'augmentation de la vitesse de rotation, à condition toutefois de pouvoir accepter un rotor de structure plus complexe, ce qui n'est pas toujours compatible avec les contraintes de coûts, notamment.

Les publications WO 00/38301 et WO 00/38298 appartenant à l'état de la technique au sens de l'Article 54(3) CBE divulguent chacune une machine électrique tournante ayant des aimants Nord-Sud appartenant à deux pôles consécutifs et placés côte à côte ainsi que des pièces magnétiques à reluctance appartenant à deux pôles consécutifs et également placés côte à côte.

Le but de l'invention est de permettre de réaliser des machines tournantes délivrant une énergie électrique optimisée en fonction de la charge reliée à l'induit de la machine.

Afin d'atteindre ce but, l'invention propose une machine électrique tournante, comprenant un stator pourvu d'au moins un bobinage d'induit logé dans des encoches formant des pôles statoriques, et un rotor monté rotatif à l'intérieur du stator, le rotor possédant à sa périphérie externe des pôles magnétiques comportant d'une part, des aimants Nord-Sud et d'autre part, des pièces magnétiques à réluctance, les aimants Nord-Sud appartenant à deux pôles consécutifs n, n+1 étant regroupés côte à côte, et les pièces magnétiques à réluctance appartenant à deux pôles consécutifs n+2, n+3 étant également côte à côte. Conformément à l'invention,

le stator comporte un bobinage d'excitation monté fixe autour du stator, le stator présentant deux parties magnétiques séparées par une région amagnétique au droit du bobinage d'excitation, du côté intérieur de celui-ci.

Des aspects préférés, mais non limitatifs de la machine tournante selon l'invention sont les suivants :
- il est prévu une pièce magnétique entourant lesdites parties magnétiques du stator et en contact avec elles de manière à permettre la fermeture dudit trajet magnétique dans le stator, ladite pièce magnétique comprenant une encoche pour recevoir le bobinage d'excitation.
- la largeur axiale de la région amagnétique est sensiblement supérieure à la largeur de l'entrefer séparant le rotor du stator.
- les aimants du rotor sont disposés de manière dissymétrique par rapport au plan médian transversal à l'axe (X) de rotation du rotor qui est situé au droit du bobinage d'excitation.
- les aimants du rotor occupent un espace dont la largeur, selon une direction tangentielle du rotor, varie quand on se déplace selon une direction parallèle à l'axe (X) de rotation du rotor.
- ledit au moins un bobinage d'excitation globale est relié à une alimentation électrique variable de sorte que le flux magnétique généré par ledit bobinage d'excitation globale peut renforcer les flux induits entre le rotor et le stator.
- il est prévu des moyens pour inverser le signe de l'alimentation du bobinage d'excitation globale de sorte que le flux magnétique généré par le bobinage d'excitation globale diminue les flux induits dans le stator.
- le rotor possède suivant sa direction tangentielle une répartition de parties polaires à aimant(s) permanent(s) définissant chacune deux pôles de polarité imposée par aimant(s) et de parties polaires à réluctance définissant chacune deux pôles de polarités libres.
- les aimants sont des aimants à flux essentiellement radial.
- les aimants sont des aimants à ferrites.
- les aimants sont des aimants à terres rares.
- les aimants sont des aimants à ferrites et à terres rares.
- la machine électrique tournante consiste en un alternateur-démarreur de véhicule automobile.

D'autres aspects, buts et avantages de la présente invention apparaîtront mieux à la lecture de la description détaillée suivante de diverses formes de réalisation de celle-ci, données à titre d'exemple non limitatif et faites par référence aux dessins annexés, sur lesquels outre les figures 1 et 2 déjà décrites :
- la figure 3 est une demi-vue schématique en coupe axiale d'une première forme de réalisation d'une machine selon l'invention, illustrant le principe général de fonctionnement de l'invention qui met en oeuvre un bobinage d'excitation dite « globale »,
- la figure 4 est une vue schématique partielle d'une machine tournante selon l'invention,
- la figure 5 est une vue développée en plan d'un premier mode de réalisation d'un rotor destiné à être mis en oeuvre dans une machine selon l'invention,
- la figure 6 est une vue en perspective du rotor correspondant à la vue développée de la figure 5,
- la figure 7 est une vue développée en plan d'un deuxième mode de réalisation d'un rotor destiné à être mis en oeuvre dans une machine selon l'invention,
- la figure 8 est une vue en perspective du rotor correspondant à la vue développée de la figure 7,
- la figure 9 est une vue en perspective d'un troisième mode de réalisation d'un rotor destiné à être mis en oeuvre dans une machine selon l'invention,
- les figures 10a et 10b sont deux vues schématiques partielles d'une machine selon l'invention mettant en oeuvre le rotor de la figure 9,
- la figure 11 est une vue de détail d'une griffe de rotor d'une machine selon l'invention,

La structure du rotor peut être celle, connue en soi, d'un rotor tel que représenté sur les figures 1 et 2 et mettant en oeuvre une alternance de pôles Nord et Sud définis par des aimants permanents, séparés par des pièces magnétiques de défluxage. Comme on le verra dans la suite de ce texte, la structure du rotor peut également être adaptée de manière spécifique pour augmenter encore les capacités de défluxage de la machine.

Le stator 100 est principalement composé de quatre éléments :
- une carcasse de stator formée d'une superposition 110 de tôles statoriques de forme généralement annulaire, qui entoure le rotor. Comme on le verra par la suite, les tôles peuvent avoir une géométrie classique et comporter sur leur périphérie interne une série d'encoches similaires aux encoches 14 de la figure 2, délimitées par des pôles statoriques. Les tôles statoriques ne forment pas un empilement ininterrompu selon la direction axiale parallèle à l'axe X. Au contraire, les tôles sont réparties en deux paquets 110a et 110b adjacents aux deux extrémités axiales respectives de la machine, définissant ainsi un espace central 115 amagnétique qui débouche sur l'entrefer. L'espace 115 peut être laissé libre (c'est à dire rempli d'air), ou comprendre tout matériau amagnétique connu,
- le stator est entouré selon la direction radiale par une deuxième carcasse magnétique annulaire de retour de flux 120, avec laquelle les tôles de stator sont en contact. La carcasse 120 comporte sur sa périphérie interne et dans une région axialement médiane un évidemment annulaire 125 communiquant avec l'espace 115,
- un bobinage d'excitation dite « globale » 130, alimenté par une source de tension de signe et d'amplitude variables et logé dans l'évidement 125,
- et des bobinages d'induit polyphasés 140 enroulés autour des pôles statoriques. Les bobinages 140 (dont les chignons sont schématiquement représentés au-delà des tôles qu'ils entourent) sont classiques.

On comprend que lorsque le bobinage d'excitation 130 est alimenté, il crée dans la région du rotor, via les carcasses 120 et 110, un flux magnétique FD' rentrant dans le stator d'un côté par rapport à la région axialement médiane, et en sortant de l'autre côté. Ce flux se superpose aux autres flux résultant de l'interaction entre le rotor et le stator.

A cet égard, il est important d'observer que la largeur suivant la direction axiale de l'espace 115, notée L, est sensiblement supérieure à l'épaisseur e de l'entrefer. Cette disposition permet de garantir que le flux FD' généré par le bobinage d'excitation ne se ferme pas à l'intérieur du stator en transitant directement entre les paquets de tôles 110a et 110b , mais que ce flux passe obligatoirement à travers le rotor.

Ainsi, le bobinage d'excitation 130 génère un flux FD' de géométrie sensiblement torique entre le stator et le rotor, et ce flux va pouvoir, notamment avec les exemples de rotors décrits plus loin, modifier l'excitation de la machine, de façon réglable selon le signe et l'amplitude de l'alimentation du bobinage d'excitation.

Dans le cas d'un alternateur de véhicule automobile, il est possible de concevoir le rotor et le stator de manière à produire, en l'absence du flux FD' généré par le bobinage d'excitation globale 130, une énergie électrique inférieure à celle exigée en charge maximale.

On adapte ensuite l'énergie électrique délivrée par l'alternateur en jouant sur l'alimentation du bobinage d'excitation globale 130 : ce bobinage peut ainsi être alimenté avec une tension d'un premier signe de manière à renforcer l'intensité du flux totalisé dans l'induit face à une augmentation de la charge.

Inversement, on peut alimenter le bobinage 130 par une tension de signe inverse de manière à réduire l'intensité du flux totalisé dans l'induit face à une diminution de la charge ; on conçoit à cet effet le bobinage 130 et son alimentation en fonction de la plage souhaitée de débit de sortie.

Les moyens de commande de cette excitation globale peuvent mettre en oeuvre soit un transistor de commutation unique dans le cas d'une alimentation de signe constant destinée simplement à renforcer les flux induits entre le rotor et le stator, soit un pont en H à quatre transistors dans le cas où l'on souhaite pouvoir inverser le signe de l'alimentation du bobinage d'excitation globale 130.

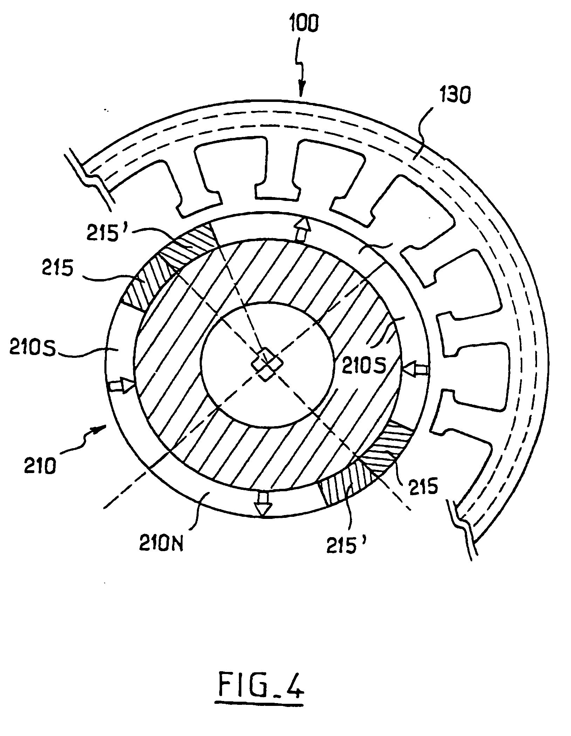

En référence maintenant à la figure 4, on a représenté schématiquement une machine tournante selon l'invention avec son stator 100 renfermant un bobinage d'excitation globale 130, les bobinages d'induit 140 n'étant pas représentés sur la figure. Le rotor 210 de cette machine possède à sa périphérie deux paires d'aimants 210N, 210S, alternés avec deux paires de pièces magnétiques 215 et 215'.

Bien entendu, on peut prévoir un rotor avec un nombre quelconque de paires d'aimants alternés avec des pièces magnétiques.

Grâce à une telle structure de rotor, et en particulier grâce au regroupement côte à côte des aimants permanents correspondant à deux pôles successifs n et n+1, et au regroupement des pièces magnétiques correspondant à deux pôles successifs n+1 et n+2, on peut obtenir de bonnes qualités de défluxage de la machine car les flux induits des aimants d'une part et de défluxage d'autre part sont mieux individualisés que dans le mode de réalisation connu des figures 1 et 2. On a constaté également que cet agencement permettait avantageusement de réduire les ondulations de couple lors du fonctionnement de la machine.

Ainsi, avec de bonnes capacités de défluxage, il est possible de recourir au bobinage 130 uniquement pour renforcer le flux, si bien que ce bobinage peut être alimenté par un courant unidirectionnel, ce qui évite le recours à un pont en H coûteux.

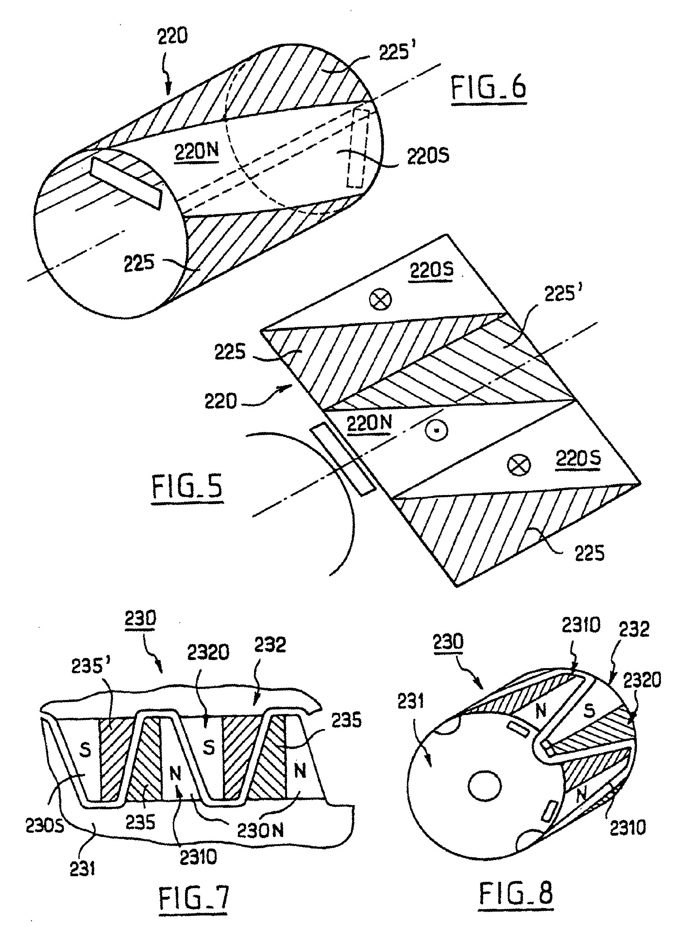

En référence maintenant aux figures 5 et 6, on va illustrer une première forme de réalisation concrète d'un rotor permettant de mettre en oeuvre le bobinage d'excitation globale 130 pour modifier l'excitation.

Le rotor 220 possède ainsi des aimants triangulaires à flux radial. Plus précisément, un aimant Nord 220N présente la forme générale d'un triangle rectangle dont un grand côté est parallèle à l'axe de rotation et dont un petit côté affleure à une extrémité axiale du rotor pour définir un pôle. Cet aimant Nord 220N est adjacent, par son grand côté, au grand côté d'un aimant Sud 220S orienté tête-bêche, qui définit par son petit côté un pôle à l'extrémité opposée. Des parties magnétiques à réluctance 225, 225' s'étendent le long des aimants à partir de leurs hypoténuses.

Avantageusement, les aimants réalisés sous la forme générale de triangle-rectangle permettent notamment de réduire le bruit magnétique de la machine électrique tournante.

Ici encore, on peut prévoir un nombre quelconque de paires d'aimants 220N, 220S en alternance avec un nombre correspondant de paires de pièces magnétiques.

Les figures 7 et 8 illustrent quant à elles l'application de la présente invention au cas d'un rotor 230 à griffes, selon un deuxième mode préféré de réalisation du rotor.

Un tel rotor à griffes possède, de façon classique en soi, une première pièce 231 possédant une première série de griffes généralement triangulaires 2310 et une seconde pièce 232 possédant une seconde série de griffes généralement triangulaires 2320, ces griffes s'imbriquant les unes dans les autres.

Dans ce cas, chaque griffe 2310 de la première série possède, dans un sens tangentiel donné (de la gauche vers la droite sur la figure 7), une pièce magnétique à réluctance 235 suivie d'un aimant 230N définissant un pôle Nord, tandis que chaque griffe 2320 de la seconde série possède, dans le même sens, un aimant 230S définissant un pote Sud suivi d'une pièce magnétique à réluctance 235'. On retrouve ainsi une structure d'aimants et de pièces magnétiques de réluctance analogue à celle de la figure 4.

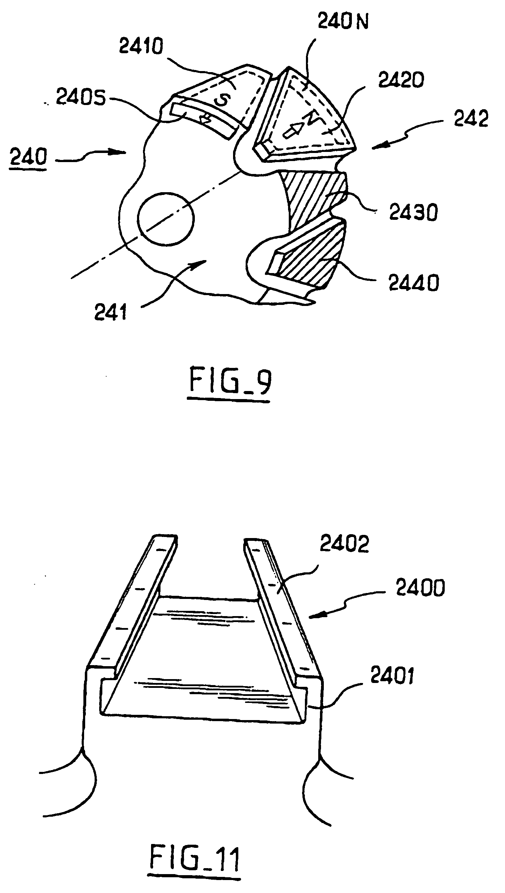

La figure 9 illustre une mise en oeuvre de la présente invention avec un rotor 240 à griffes selon un troisième mode préféré de réalisation du rotor.

Le rotor 240 comporte de façon classique en soi une première partie 241 pourvue d'un certain nombre de griffes généralement triangulaires 2410, et une seconde partie 242 pourvue d'un certain nombre de griffes généralement triangulaires 2420, ces griffes 2410, 2420 s'imbriquant les unes les autres.

Dans ce cas, on prévoit dans la direction circonférentielle du rotor deux griffes à réluctance et deux griffes à aimants possédant des aimants surfaciques ou enterrés 240S et 240N pour y imposer des polarités Sud et Nord respectivement, et ainsi de suite.

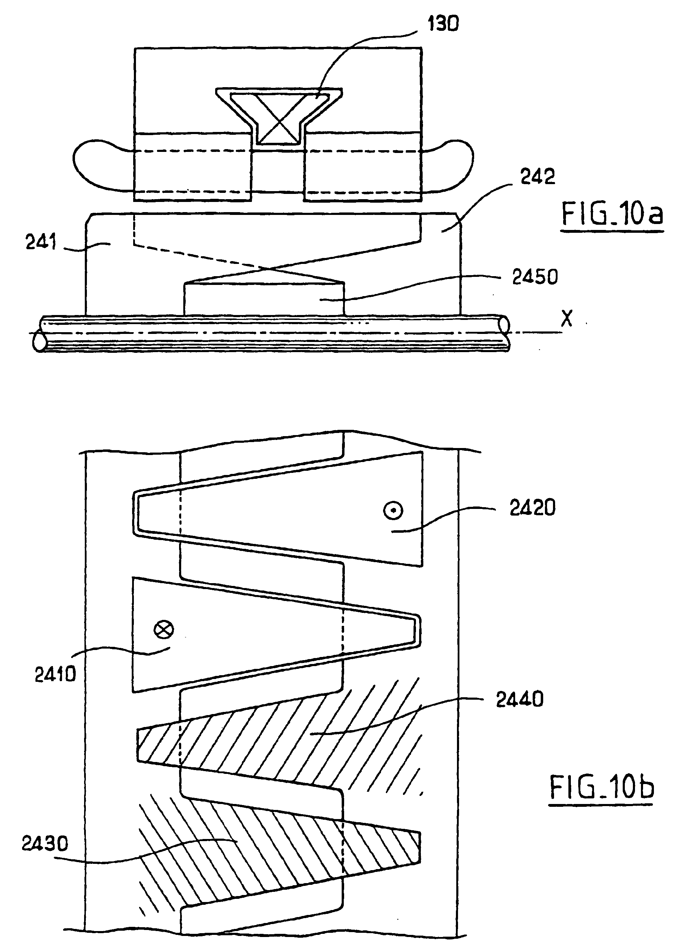

Les figures 10a et 10b sont respectivement une demi-vue en coupe axiale d'une machine selon l'invention comportant le rotor à griffes 240 décrit en référence à la figure 9, et une vue développée partielle de ce rotor, un noyau magnétique 2450 reliant les pièces polaires 241 et 242. Ces pièces polaires peuvent également être de type à demi-noyau.

On comprend que le flux FD' créé par le bobinage 130 permet de renforcer (ou d'amoindrir, selon son signe) le flux totalisé dans l'induit. Sur la figure 10b, le flux FD' entre et sort du rotor principalement par les pôles des griffes à réluctance, évitant ainsi les pôles à aimants du fait que l'entrefer moyen équivalent sur un trajet qui passerait par les aimants est plus grand (il inclut deux fois l'épaisseur d'un aimant).

Ainsi pour renforcer le flux totalisé, aux pôles à aimants 2410, Sud, et 2420, Nord, on fera suivre selon la configuration de la figure 10b un pôle à réluctance 2430, Sud, et un pôle à réluctance 2440, Nord, ce qui correspond à une répartition régulière de pôles Sud-Nord-Sud-Nord pour un sens donné du courant d'excitation.

Pour amoindrir le flux totalisé dans l'induit, on inversera le signe du courant alimentant le bobinage 130, pour avoir selon une configuration non représentée sur les figures un pôle à réluctance 2430 Nord et un pôle à réluctance 2440 Sud, ce qui correspond à une répartition de pôles Sud-Nord-Nord-Sud. Si le courant inverse est tel que les pôles aimantés ont le même flux en valeur absolue que le flux des pôles à réluctance, le flux totalisé est nul, ainsi que la puissance utile.

L'invention peut ainsi être mise en oeuvre dans des machines tournantes diverses dont le rotor doit comporter des parties aimantées ou magnétiques ne s'étendant pas strictement parallèlement à l'axe de rotation du rotor de la machine.

La figure 11 montre un exemple de réalisation des griffes du rotor 240 dans le cas où celui-ci porte des aimants surfaciques, lesdits aimants surfaciques étant alors insérés à l'intérieur des griffes.

Il est ainsi possible de réaliser par matriçage la forme générale des parois latérales 2401 des griffes 2400, la forme définitive des griffes étant réalisée en usinant l'intérieur desdites faces latérales 2401 de manière à constituer des retours 2402 qui maintiendront les aimants en place.
Comme on l'aura compris, un stator de type classique (non représenté) ne comportant pas de moyens d'excitation globale (130) pourra être également utilisé en combinaison avec un rotor dépourvu de moyens d'excitation globale tels que les rotors décrits aux figures 3 à 10b.

Bien entendu, la présente invention n'est nullement limitée aux formes de réalisation décrites et représentées, mais l'homme du métier saura y apporter toutes variantes ou modifications conformes à son esprit.

Il est ainsi possible selon l'invention de prévoir plusieurs bobinages d'excitation tels que le bobinage 130, réparti dans plusieurs évidements de la carcasse 120, les trajets de retour de flux entre le stator et le rotor (qui correspondent sur la figure 3 aux deux zones axialement périphériques dans lesquelles les paquets de tôles respectifs 110a et 110b sont à proximité du rotor) devant alors encadrer l'ensemble des bobinages d'excitation.

En outre, en fonction de la capacité de défluxage souhaitée, on peut jouer sur la proportion entre les secteurs à pôles aimantés et les secteurs à pôles à réluctance prévus sur le rotor, et par exemple prévoir un secteur à deux pôles aimantés Sud et Nord, un second secteur identique à pôles aimantés Sud et Nord, un secteur à deux pôles à réluctance, puis à nouveau deux secteurs à deux pôles aimantés chacun, etc. En tout état de cause, les modes préférés de réalisation de rotor décrits ci-dessus ne sont évidemment pas limitatifs.

De manière générale, en fonction de la capacité de défluxage souhaitée, on peut jouer sur les étendues relatives des aimants et des pièces magnétiques à réluctance.

## Revendications

1. Machine électrique tournante, comprenant un stator (100) pourvu d'au moins un bobinage d'induit (140) logé dans des encoches formant des pôles statoriques, et un rotor (200, 210, 220, 230, 240) monté rotatif à l'intérieur du stator, le rotor possédant à sa périphérie externe des pôles magnétiques comportant d'une part, des aimants Nord-Sud (210N-210S, 220N-220S, 230N-230S, 240N-240S) et d'autre part, des pièces magnétiques à réluctance (215-215', 225-225', 235-235', 2430-2440), les aimants Nord-Sud (210N-210S, 220N-220S, 230N-230S, 240N-240S) appartenant à deux pôles consécutifs n, n+1 étant regroupés côte à côte, et les pièces magnétiques à réluctance (215-215', 225-225', 235-235', 2430-2440) appartenant à deux pôles consécutifs n+2, n+3 étant également côte à côte, le stator (100) comportant un bobinage d'excitation (130) monté fixe autour du stator, et présentant deux parties magnétiques (110a, 110b) séparées par une région amagnétique (115) au droit du bobinage d'excitation, du côté intérieur de celui-ci.

2. Machine électrique tournante selon la revendication 1 **caractérisée en ce qu'**il est prévu une pièce magnétique (120) entourant lesdites parties magnétiques (110a, 110b) du stator et en contact avec elles de manière à permettre la fermeture dudit trajet magnétique dans le stator, ladite pièce magnétique (120) comprenant une encoche (125) pour recevoir le bobinage d'excitation (130).

3. Machine électrique selon la revendication 1 **caractérisée en ce que** la largeur (L) axiale de la région amagnétique (115) est sensiblement supérieure à la largeur (e) de l'entrefer séparant le rotor du stator.

4. Machine électrique tournante selon la revendication 1 **caractérisée en ce que** les aimants du rotor sont disposés de manière dissymétrique par rapport au plan médian transversal à l'axe (X) de rotation du rotor qui est situé au droit du bobinage d'excitation (130).

5. Machine électrique tournante selon la revendication 1 **caractérisée en ce que** les aimants du rotor occupent un espace dont la largeur, selon une direction tangentielle du rotor, varie quand on se déplace selon une direction parallèle à l'axe (X) de rotation du rotor.

6. Machine électrique tournante selon la revendication 1 **caractérisée en ce que** ledit au moins un bobinage d'excitation globale (130) est relié à une alimentation électrique variable de sorte que le flux magnétique généré par ledit bobinage d'excitation globale peut renforcer les flux induits entre le rotor et le stator.

7. Machine électrique tournante selon la revendication 6 **caractérisée en ce qu'**il est prévu des moyens pour inverser le signe de l'alimentation du bobinage d'excitation globale (130), de sorte que le flux magnétique généré par le bobinage d'excitation globale diminue les flux induits dans le stator.

8. Machine électrique tournante selon la revendication 1 **caractérisée en ce que** le rotor (240) possède suivant sa direction tangentielle une répartition de parties polaires à aimant(s) permanent(s) définissant chacune deux pôles de polarité imposée par aimant(s) et de parties polaires à réluctance définissant chacune deux pôles de polarités libres.

9. Machine électrique tournante selon la revendication 1 **caractérisée en ce que** les aimants sont des aimants à flux essentiellement radial.

10. Machine électrique tournante selon la revendication 1 **caractérisée en ce que** les aimants sont des aimants à ferrites.

11. Machine électrique tournante selon la revendication 1 **caractérisée en ce que** les aimants sont des aimants à terres rares.

12. Machine électrique tournante selon la revendication 1 **caractérisée en ce que** les aimants sont des aimants à ferrites et à terres rares.

13. Machine électrique tournante selon la revendication 1 **caractérisée en ce qu'**elle consiste en un alternateur de véhicule automobile.

14. Machine électrique tournante selon la revendication 1 **caractérisée en ce qu'**elle consiste en un alternateur-démarreur de véhicule automobile.

## Claims

1. Rotary electric machine, comprising a stator (100) which is provided with at least one armature winding (140) accommodated in notches which form stator poles, and a rotor (200, 210, 220, 230, 240) which is fitted such as to rotate inside the stator, the rotor having at its outer periphery magnetic poles, comprising firstly North-South magnets (210N-210S, 220N-220S, 230N-230S, 240N-240S), and secondly magnetic parts with reluctance (215-215', 225-225', 235-235', 2430-2440), the North-South magnets (210N-210S, 220N-220S, 230N-230S, 240N-240S) belonging to two consecutive poles n, n+1 being grouped side by side, and the magnetic parts with reluctance (215-215', 225-225', 235-235', 2430-2440) belonging to two consecutive poles n+2, n+3 also being side by side, the stator (100) comprising an excitation winding (130) which is fitted around the stator and having two magnetic parts (110a, 110b) which are separated by a non-magnetic region (115) at right-angles to the excitation winding, on the inner side of the latter.

2. Rotary electric machine according to claim 1, **characterised in that** a magnetic part (120) is provided which surrounds the said magnetic parts (110a, 110b) of the stator and is in contact with the latter, such as to permit closure of the said magnetic path in the stator, the said magnetic part (120) comprising a notch (125) to receive the excitation winding (130).

3. Electric machine according to claim 1, **characterised in that** the axial width (L) of the non-magnetic region (115) is substantially greater than the width (e) of the air gap which separates the rotor from the stator.

4. Rotary electric machine according to claim 1, **characterised in that** the magnets of the rotor are disposed in an asymmetric manner relative to the median plane which is transverse to the axis (X) of rotation of the rotor which is situated at right-angles to the excitation winding (130).

5. Rotary electric machine according to claim 1, **characterised in that** the magnets of the rotor occupy a space, the width of which, according to a tangential direction of the rotor, varies when displacement takes place according to a direction parallel to the axis (X) of rotation of the rotor.

6. Rotary electric machine according to claim 1, **characterised in that** the said at least one global excitation winding (130) is connected to a variable electric supply, such that the magnetic flow generated by the said global excitation winding can reinforce the flows induced between the rotor and the stator.

7. Rotary electric machine according to claim 6, **characterised in that** means are provided to invert the sign of the supply of the global excitation winding (130), such that the magnetic flow generated by the global excitation winding decreases the flows induced in the stator.

8. Rotary electric machine according to claim 1, **characterised in that** the rotor (240) has according to its tangential direction a distribution of polar parts with permanent magnet(s) each defining two poles with polarity imposed by magnet(s), and of polar parts with reluctance each defining two poles with free polarities.

9. Rotary electric machine according to claim 1, **characterised in that** the magnets are magnets with substantially radial flow.

10. Rotary electric machine according to claim 1, **characterised in that** the magnets are ferrite magnets.

11. Rotary electric machine according to claim 1, **characterised in that** the magnets are rare earth magnets.

12. Rotary electric machine according to claim 1, **characterised in that** the magnets are ferrite and rare earth magnets.

13. Rotary electric machine according to claim 1, **characterised in that** it consists of a motor vehicle alternator.

14. Rotary electric machine according to claim 1, **characterised in that** it consists of an alternator-starter of a motor vehicle.

## Patentansprüche

1. Rotierende elektrische Maschine, umfassend einen Stator (100) mit wenigstens einer Ankerwicklung (140), die in Nuten aufgenommen ist, die Statorpole bilden, und einen Rotor (200, 210, 220, 230, 240), der drehbar im Innern des Stators gelagert ist, wobei der Rotor an seinem äußeren Umfang Magnetpole besitzt, die einerseits Nord-Süd-Magnete (210N-210S, 220N-220S, 230N-230S, 240N-240S) und andererseits magnetische Reluktanzstücke (215-215', 225-225', 235-235', 2430-2440) umfassen, wobei die Nord-Süd-Magnete (210N-210S, 220N-220S, 230N-230S, 240N-240S), die zu zwei aufeinanderfolgenden Polen n, n+1 gehören, nebeneinander angeordnet sind und die magnetischen Reluktanzstücke (215-215', 225-225', 235-235', 2430-2440), die zu zwei aufeinanderfolgenden Polen n+2, n+3 gehören, ebenfalls nebeneinander angeordnet sind, wobei der Stator (100) eine Erregerwicklung (130) umfasst, die fest um den Stator herum angebracht ist und zwei magnetische Teile (110a, 110b) aufweist, die durch einen nichtmagnetischen Bereich (115) in Höhe der Erregerwicklung auf deren Innenseite getrennt sind.

2. Rotierende elektrische Maschine nach Anspruch 1, **dadurch gekennzeichnet, dass** ein Magnetstück (120) vorgesehen ist, das die besagten magnetischen Teile (110a, 110b) des Stators umgibt und sich mit ihnen in Kontakt befindet, um das Schließen der besagten Magnetbahn im Stator zu ermöglichen, wobei das besagte Magnetstück (120) eine Nut (125) umfasst, um die Erregerwicklung (130) aufzunehmen.

3. Rotierende elektrische Maschine nach Anspruch 1, **dadurch gekennzeichnet, dass** die axiale Breite (L) des nichtmagnetischen Bereichs (115) etwas größer als die Breite (e) des Luftspalts ist, der den Rotor vom Stator trennt.

4. Rotierende elektrische Maschine nach Anspruch 1, **dadurch gekennzeichnet, dass** die Magnete des Rotors asymmetrisch bezogen auf die Mittelebene quer zur Drehachse (X) des Rotors angeordnet sind, die sich in Höhe der Erregerwicklung (130) befindet.

5. Rotierende elektrische Maschine nach Anspruch 1, **dadurch gekennzeichnet, dass** die Magnete des Rotors einen Raum einnehmen, dessen Breite entlang einer tangentialen Richtung des Rotors sich verändert, wenn man sich entlang einer zur Drehachse (X) des Rotors parallelen Richtung bewegt.

6. Rotierende elektrische Maschine nach Anspruch 1, **dadurch gekennzeichnet, dass** die besagte wenigstens eine Gesamterregerwicklung (130) mit einer veränderlichen elektrischen Stromversorgung verbunden ist, so dass der durch die besagte Gesamterregerwicklung erzeugte Magnetfluss die induzierten Flüsse zwischen dem Rotor und dem Stator verstärken kann.

7. Rotierende elektrische Maschine nach Anspruch 6, **dadurch gekennzeichnet, dass** Mittel vorgesehen sind, um das Vorzeichen der Stromversorgung der Gesamterregerwicklung (130) umzukehren, so dass der durch die Gesamterregerwicklung erzeugte Magnetfluss die induzierten Flüsse im Stator verringert.

8. Rotierende elektrische Maschine nach Anspruch 1, **dadurch gekennzeichnet, dass** der Rotor (240) entlang seiner tangentialen Richtung eine Verteilung von Polteilen mit Permanentmagnet(en), die jeweils zwei Pole mit durch Magnet(e) vorgegebener Polung definieren, und zwei Reluktanz-Polteile besitzt, die jeweils zwei Pole mit freien Polungen definieren.

9. Rotierende elektrische Maschine nach Anspruch 1, **dadurch gekennzeichnet, dass** es sich bei den Magneten um Magnete mit im Wesentlichen radialen Fluss handelt.

10. Rotierende elektrische Maschine nach Anspruch 1, **dadurch gekennzeichnet, dass** es sich bei den Magneten um Ferritmagnete handelt.

11. Rotierende elektrische Maschine nach Anspruch 1, **dadurch gekennzeichnet, dass** es sich bei den Magneten um Seltenerde-Magnete handelt.

12. Rotierende elektrische Maschine nach Anspruch 1, **dadurch gekennzeichnet, dass** es sich bei den Magneten um Ferrit- und Seltenerde-Magnete handelt.

13. Rotierende elektrische Maschine nach Anspruch 1, **dadurch gekennzeichnet, dass** sie aus einem Wechselstromgenerator für Kraftfahrzeuge besteht.

14. Rotierende elektrische Maschine nach Anspruch 1, **dadurch gekennzeichnet, dass** sie aus einem Anlassergenerator für Kraftfahrzeuge besteht.
